# EUROPÄISCHE PATENTSCHRIFT

(11) **EP 1 503 110 B1**
(45) Veröffentlichungstag und Bekanntmachung des Hinweises auf die Patenterteilung: **14.12.2005**
(21) Anmeldenummer: 04015444.5
(22) Anmeldetag: 01.07.2004
(51) Int. Cl.: F16H 15/38

(54) **Toroidgetriebe mit mittig angeordneter Spannhydraulik**
Toroidal transmission with an intermediate located hydraulic clamping system
Transmission torique avec un dispositif de serrage disposé intermediaire

(30) Priorität: 30.07.2003 DE 10334717
(43) Veröffentlichungstag der Anmeldung: 02.02.2005
(73) Patentinhaber: Bayerische Motoren Werke Aktiengesellschaft, 80809 München (DE)
(72) Erfinder: Wolf, Lothar, 83607 Holzkirchen (DE); Rieder, Ekkehard, 80997 München (DE); Ohnemus, Ulrich, 82285 Hattenhofen (DE)

(56) Entgegenhaltungen:
- DE-A- 4 446 426
- DE-A- 19 859 380
- DE-A- 19 943 623
- US-A- 2 100 629
- US-A- 2 850 911

## Beschreibung

Die vorliegende Erfindung betrifft ein Toroidgetriebe gemäß dem Oberbegriff des Patenanspruches 1.

Ein Toroidgetriebe ist beispielsweise aus der DE 199 43 623 A1 bekannt. Das Toroidgetriebe weist zwei koaxial angeordnete Toroidgetriebeeinheiten auf. Jede Toroidgetriebeeinheit besteht im Wesentlichen aus einer Antriebsscheibe und einer Abtriebsscheibe. Die beiden Antriebsscheiben sind im Bereich zwischen den beiden Abtriebsscheiben angeordnet und werden durch ein Zahnrad angetrieben. Von den Antriebsscheiben wird das Drehmoment über Reibrollen, die im Folgenden als "Roller" bezeichnet werden, zu den Abtriebsscheiben übertragen. Für die Drehmomentübertragung von den Antriebsscheiben auf die jeweils zugeordnete Abtriebsscheibe ist eine axiale Vorspannung der gesamten Anordnung, d.h. der Antriebsscheiben, der Roller und der Abtriebsscheiben erforderlich. Bei bekannten Toroidgetrieben wird die Scheibenanordnung von einem Ende her gespannt, d.h. an einer der beiden Abtriebsscheiben. Die andere Abtriebsscheibe stützt die Spannkräfte ab und ist daher axial fest angeordnet.

Ein Vorteil von Toroidgetrieben gegenüber herkömmlichen Getriebekonzepten besteht darin, dass ein sog. Geared-Neutral-Zustand darstellbar ist, der sich dadurch auszeichnet, dass eine Getriebeabtriebswelle die Drehzahl Null hat. Dies wird durch Einstellen einer bestimmten Drehzahl an einer der beiden Abtriebsscheiben des Toroidgetriebes erreicht. In einem Summierungsgetriebe wird eine Eingangsdrehzahl, mit der die Antriebsscheiben des Toroidgetriebes angetrieben werden, der Abtriebsscheibendrehzahl überlagert, so dass sich an einer Ausgangswelle des Summierungsgetriebes die Drehzahl Null ergibt. Wenn, wie beim oben genannten Stand der Technik, das Anpress-System des Toroidgetriebes an einer der Abtriebsscheiben angeordnet ist, d.h. an einer der äußeren Scheiben, dann ergibt sich eine relativ hohe Massenträgheit, die bei einer Beschleunigung aus dem Geared-Neutral-Zustand heraus mit beschleunigt werden muss. Insgesamt ergibt sich ein relativ träges Ansprechverhalten des Getriebes, was für sportlichere Fahrzeuge nicht bzw. wenig geeignet ist. Ein wesentlicher Nachteil von Toroidgetrieben, bei denen das Anpress-Systems an einer der äußeren Scheiben angeordnet ist, besteht auch darin, dass sie eine relativ große Baulänge aufweisen.

Aus der US 2 100 629 ist ein Toroidgetriebe mit zwei Toroidgetriebeeinheiten bekannt, die jeweils eine Antriebsscheibe und eine Abtriebsscheibe aufweisen. Die beiden Abtriebsscheiben sind im Bereich zwischen den beiden Antriebsscheiben angeordnet.

Aufgabe der Erfindung ist es, ein Toroidgetriebe zu schaffen, bei dem die Spanneinrichtung so konzipiert und angeordnet ist, dass sich ein gutes Beschleunigungsverhalten, insbesondere aus dem Geared-Neutral-Zustand heraus, und eine kompakte Bauweise ergibt.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einem Toroidgetriebe mit zwei Toroidgetriebeeinheiten aus. Jeder der beiden Toroidgetriebeeinheiten sind jeweils eine Antriebsscheibe, eine koaxial dazu angeordnete Abtriebsscheibe und mehrere, vorzugsweise drei, zwischen der Antriebsscheibe und der Abtriebsscheibe angeordnete Roller zugeordnet. Die beiden Antriebsscheiben der Toroidgetriebeeinheiten sind im Bereich zwischen den beiden Abtriebsscheiben angeordnet. Ferner ist eine "Axialkrafterzeugungseinrichtung" bzw. eine Spanneinrichtung vorgesehen. Die Spanneinrichtung erzeugt eine Spannkraft, welche die Antriebsscheiben, die Abtriebsscheiben und die Roller in Axialrichtung, d.h. in Variatorlängsrichtung gegeneinander verspannt. Durch die axiale Verspannung der Scheiben und der dazwischen angeordneten Roller kann Drehmoment von den Antriebsscheiben über die zugeordneten Roller auf die jeweils zugeordnete Abtriebsscheibe übertragen werden.

Der Kern der Erfindung besteht nun darin, dass die Axialkrafterzeugungseinrichtung als Spannhydraulik ausgebildet ist, welche einen Druckraum aufweist, der im Bereich zwischen den beiden Antriebsscheiben vorgesehen ist. Durch Aufbringen eines Hydraulikdrucks in dem Druckraum wird ein "Spanndruck erzeugt, der die beiden Antriebsscheiben auseinander spreitzt. Abgestützt wird der Spanndruck bzw. die entstehende Spannkraft durch die Abtriebsscheiben, die in Axialrichtung fest angeordnet sind.

Bei bislang bekannten Toroidgetrieben war der Bauraum zwischen den beiden Antriebsscheiben weitgehend ungenutzt bzw. war dort lediglich eine Verzahnung für den Antrieb der Antriebsscheiben vorgesehen. Gemäß der Erfindung wird der "Raum" zwischen den Antriebsscheiben zur Anordnung der Spannhydraulik genutzt, was hinsichtlich der Bauraumausnutzung als ideal anzusehen ist.

Die Antriebsscheiben weisen jeweils eine im Folgenden als "Vorderseite" bezeichnete Seite auf, auf denen die Roller der jeweiligen Toroidgetriebeeinheit abrollen und eine der Vorderseite gegenüberliegende Rückseite. Vorzugsweise bilden die Rückseiten der beiden Antriebsscheiben Begrenzungsflächen des Druckraums der Spanneinrichtung, was ebenfalls zu einer kompakten Bauweise beiträgt.

Nach einer Weiterbildung der Erfindung sind die Antriebsscheiben axial verschieblich und in Axialrichtung auch relativ verschieblich zueinander auf einem Rohr gelagert, das im Folgenden auch als "Lagerrohr" bezeichnet wird. Vorzugsweise wird der Druckraum der Spannhydraulik über eine in der Wand des Rohrs bzw. Lagerrohrs vorgesehene Ausnehmung mit Fluiddruck versorgt. Eine derartige Anordnung ist sehr günstig, da das Rohr bzw. Lagerrohr fest bezüglich eines Gehäuses des Getriebes angeordnet ist, was eine Abdichtung erleichtert.

Der Antrieb der Antriebsscheiben erfolgt vorzugsweise über eine Verzahnung, über die ein Drehmoment eingeleitet werden kann. Die Verzahnung kann unmittelbar außen an einer der Antriebsscheiben vorgesehen sein. Vorzugsweise befindet sich jedoch im Bereich zwischen den beiden Antriebsscheiben ein konzentrisch zu den Antriebsscheiben angeordneter ringartiger Verzahnungsträger, an dessen Außenumfang die Verzahnung vorgesehen ist.

Nach einer Weiterbildung der Erfindung ist der Verzahnungsträger drehfest, axial fest und fluiddicht mit einer der beiden Antriebsscheiben verbunden. Die Innenseite des Verzahnungsträgers bildet somit eine weitere Begrenzungsfläche des Druckraums der Spannhydraulik.

Zum Spannen der Toroidgetriebeeinheiten müssen die beiden Antriebsscheiben axial relativ zueinander verschiebbar sein. Dies kann dadurch reicht werden, dass der Verzahnungsträger, der fest mit einer der beiden Antriebsscheiben verbunden ist, über eine Schiebeverzahnung drehfest und axial verschieblich mit der anderen Antriebsscheibe verbunden ist. Die beiden Antriebsscheiben können prinzipiell unmittelbar über den Verzahnungsträger miteinander verbunden sein. Vorzugsweise ist jedoch im Bereich zwischen den beiden Antriebsscheiben zusätzlich ein zylindrisches Element vorgesehen. Das zylindrische Element ist vorzugsweise drehfest, axial fest und fluiddicht mit einer der Antriebsscheiben bzw. mit dem Verzahnungsträger verbunden. Mit der anderen Antriebsscheibe ist das zylindrische Element axial verschieblich verbunden, beispielsweise derart, dass das zylindrische Element einen Absatz oder den Außenumfang der anderen Antriebsscheibe zylinderartig umgreift, was eine Relativverschiebung in Axialrichtung der beiden Antriebsscheiben ermöglicht. Die Innenseite des zylindrischen Elements bildet somit eine weitere Begrenzungsfläche des Druckraums der Spanneinrichtung.

Wie oben bereits erwähnt, können die beiden Antriebsscheiben über den Verzahnungsträger in Drehrichtung miteinander gekoppelt sein. Alternativ oder ergänzend dazu ist es auch möglich, dass das zylindrische Element zur Drehmomentübertragung eingesetzt wird. Beispielsweise kann zwischen dem zylindrischen Element und der anderen Antriebsscheibe eine Längsverzahnung oder eine sonstige formschlüssige Verbindung vorgesehen sein.

Wenngleich für mittlere und hohe Getriebelasten der erforderliche Spanndruck durch die Spannhydraulik aufgebracht wird, kann zwischen den beiden Antriebsscheiben eine Axialdruckfeder, z.B. eine Tellerfeder, vorgesehen sein, welche eine gewisse Grundanpressung ("Offset"-Axialdruck) erzeugt, der die Übertragung geringer Drehmomente ermöglicht oder allein zur zeugung einer gewissen Montagevorspannung vorgesehen sein kann. Die Axialdruckfeder bzw. Tellerfeder kann beispielsweise so angeordnet sein, dass sie sich an der Rückseite einer der beiden Antriebsscheiben und der Innenseite des zylindrischen Elements abstützt.

Im Folgenden wird die Erfindung im Zusammenhang mit der Zeichnung näher erläutert. Es zeigen:
- Figur 1: eine Toroidgetriebeanordnung in schematischer Darstellung mit einer Spanneinrichtung an einer der Abtriebsscheiben;
- Figur 2: einen Ausschnitt aus einem Toroidgetriebe im Bereich der Spannscheiben, mit einer Spannhydraulik, die gemäß der findung zwischen den beiden Antriebsscheiben angeordnet ist;
- Figur 3: die Anordnung der Figur 2 in auseinandergebautem Zustand;
- Figur 4: ein weiteres Ausführungsbeispiel, bei dem zwischen dem zylindrischen Element und der einen Antriebsscheibe kugelförmige Drehmomentübertragungselemente vorgesehen sind; und
- Figur 5: eine Explosionszeichnung des Ausführungsbeispiels der Figur 4.

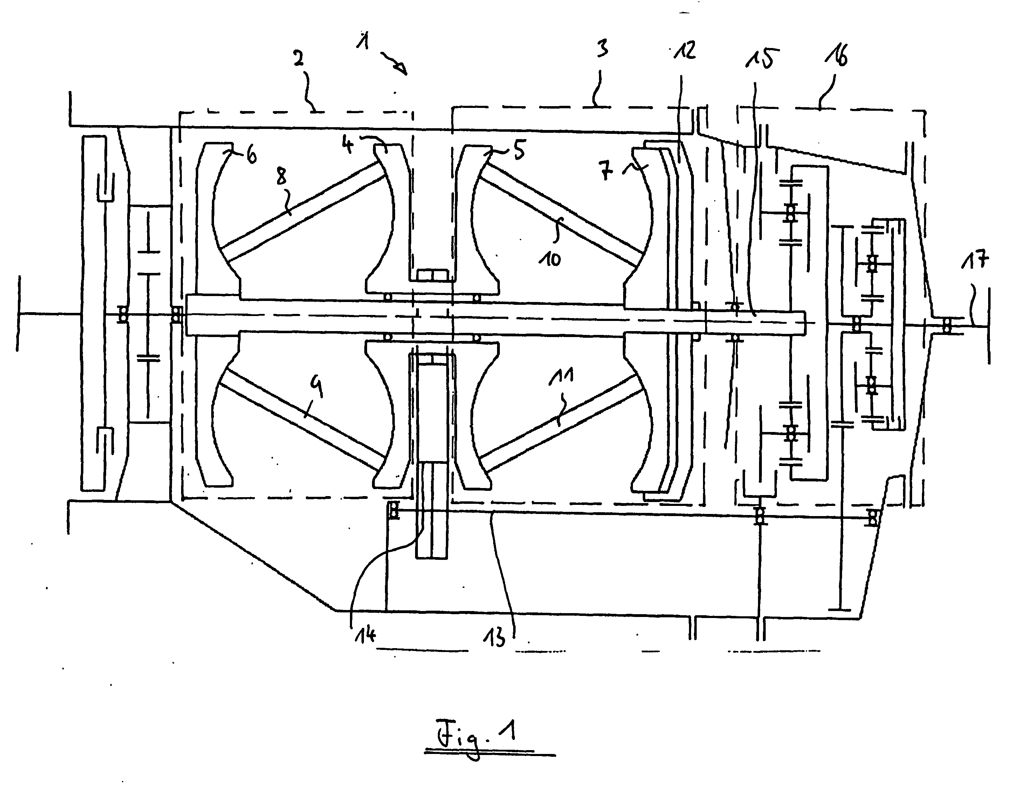

Figur 1 zeigt ein an sich bekanntes Toroidgetriebe 1 mit zwei Toroidgetriebeeinheiten 2, 3, die jeweils aus einer Antriebsscheibe 4, 5 und einer Abtriebsscheibe 6, 7 bestehen. Wie aus Figur 1 ersichtlich ist, sind die beiden Antriebsscheiben 4, 5 im Bereich zwischen den beiden Abtriebsscheiben 6, 7 angeordnet. Im Bereich zwischen der Antriebsscheibe 4 und der Abtriebsscheibe 6 sowie im Bereich zwischen der Antriebsscheibe 5 und der Abtriebsscheibe 7 sind Roller 8-11 angeordnet. Üblicherweise sind zwischen jedem Scheibenpaar jeweils drei solche Roller angeordnet. Ferner ist an der Abtriebsscheibe 7 eine Anpressvorrichtung 12 vorgesehen, welche die Abtriebsscheiben 6, 7, die Roller 8 - 11, die Antriebsscheiben 4, 5 und die Abtriebsscheibe 6 zusammenpresst, was eine Drehmomentübertragung von der Antriebsscheibe 4 über die Roller 8, 9 auf die Abtriebsscheibe 6 und von der Antriebsscheibe 5 über die Roller 10, 11 auf die Abtriebsscheibe 7 ermöglicht.

Die Antriebsscheiben 4, 5 werden über eine Vorgelegewelle 13 und eine zwischen den beiden Antriebsscheiben 4, 5 vorgesehene Verzahnung 14 angetrieben.

Die Abtriebsscheibe 7 ist über eine Abtriebswelle 15 mit einem Summierungsgetriebe 16 verbunden. Die Abtriebswelle 15 bildet einen Eingang des Summierungsgetriebes 16. Die Vorgelegewelle 13 bildet einen weiteren Eingang des Summierungsgetriebes 16. Die Übersetzung, d.h. die Drehzahl der Abtriebswelle 15 des Toroidgetriebes 1 kann nun so eingestellt werden, dass sich an der Ausgangswelle 17 des Summierungsgetriebes 16 das Drehmoment bzw. die Drehzahl 0 ergibt. Dieser Zustand wird als "Geared-Neutral-Zustand" bezeichnet. Man kann also ohne Verwendung einer mechanischen Kupplung aus dem Stand heraus anfahren.

Wie bereits erwähnt, ist die Anordnung der Spanneinrichtung 12 an einer der beiden äußeren Scheiben des Toroidgetriebes 1, hier an der Abtriebsscheibe 7, ungünstig, da eine derartige Anordnung viel Bauraum beansprucht. Außerdem ergibt sich bei einer derartigen Anordnung beim Anfahren aus dem Geared-Neutral-Zustand eine hohe Massenträgheit, was sich negativ auf die Beschleunigung eines mit einem derartigen Getriebe ausgestatteten Fahrzeugs auswirkt.

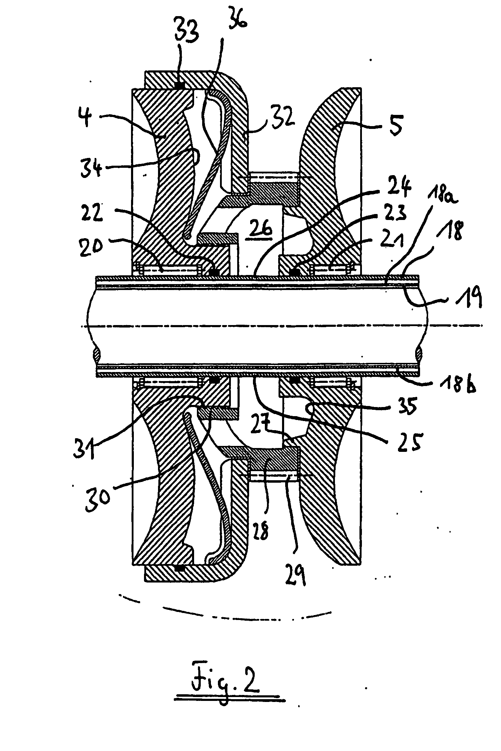

Figur 2 beschreibt ein Ausführungsbeispiel gemäß der Erfindung, wobei von dem zugrundeliegenden Toroidgetriebe, das ähnlich wie das in Figur 1 gezeigte Toroidgetriebe aufgebaut sein kann, lediglich die beiden Antriebsscheiben 4, 5 dargestellt sind. Die beiden Antriebsscheiben 4, 5 sind axial verschieblich auf einem Rohr bzw. Lagerrohr 18 gelagert, durch das die Variatorwelle bzw. Abtriebswelle 19 hindurchgeführt ist. Bei dem hier gezeigten Ausführungsbeispiel sind die beiden Antriebsscheiben 4, 5 jeweils über ein Nadellager 20, 21 auf dem Lagerrohr 18 gelagert. Ferner sind die beiden Antriebsscheiben 4, 5 jeweils über eine Dichtung 22, 23 gegenüber dem Lagerrohr 18 abgedichtet. In der Wand des Lagerrohrs 18 sind Bohrungen 24, 25 vorgesehen, über die der zwischen der Variatorwelle 19 und der Innenseite des Lagerrohrs 18 liegende ringförmige Zwischenraum in Fluidverbindung mit einem Druckraum 26 steht, der später noch näher erläutert wird.

Wie aus Figur 2 ersichtlich ist, weist die Antriebsscheibe 5 einen Zentrierabsatz 27 auf, auf den ein Verzahnungsträger 28 aufgesetzt ist. Der Verzahnungsträger 28 weist an seinem Außenumfang eine Antriebsverzahnung auf, über die Drehmoment in die beiden Antriebsscheiben 4, 5 eingeleitet werden kann. Der Verzahnungsträger 28 ist axial fest, drehfest und fluiddicht mit der Antriebsscheibe 5 verbunden. Der Verzahnungsträger 28 kann mit der Antriebsscheibe 5 beispielsweise verklebt, verschweißt oder in sonstiger Weise verbunden sein. Der Verzahnungsträger 28 weist femer einen ringförmige Abschnitt 30 auf. Über den ringförmigen Abschnitt 30 und eine Längsverzahnung 31 ist der Verzahnungsträger 28 drehfest und axial verschieblich mit dem Antriebsrad 4 verbunden. Ferner ist ein becherartiges bzw. ringzylindrisches Element 32 vorgesehen, dessen Innenumfang fest mit dem Verzahnungsträger 28 verbunden ist. Das zylindrische Element 32 kann mit dem Verzahnungsträger 28 beispielsweise verschweißt oder verklebt sein. Der Außenumfang des zylindrischen Elements 32 liegt am Außenumfang der Antriebsscheibe 4 an und ist gegenüber der Antriebsscheibe 4 durch eine Dichtung 33 abgedichtet.

Rückseiten 34, 35 der Antriebsscheiben 4 bzw. 5 sowie die Innenseite des Verzahnungsträgers 28, die Innenseite des zylindrischen Elements 32 und die Außenseite des Lagerrohrs 18 bilden ein Fluidvolumen, das oben bereits erwähnt und dort als "Druckraum 26" bezeichnet wurde. Über die zwischen der Variatorwelle 19 und dem Lagerrohr 18 ausgebildeten Spalte 18a, 18b, die z.B. durch ein auf der Variatorwelle 19 vorgesehenes Vielnutprofil gebildet sein können, und die Bohrungen 24, 25 kann in dem Druckraum 26 ein Hydraulikdruck aufgebaut werden, der die beiden Antriebsscheiben 4 auseinander drückt und somit den für den Betrieb des Toroidgetriebes (vgl. Figur 1) erforderlichen Spanndruck aufbringt.

Der Vollständigkeit halber sei noch eine Axialdruckfeder 36 erwähnt, die hier als Tellerfeder ausgebildet ist. Die Tellerfeder 36 stützt sich an der Rückseite 34 der Antriebsscheibe 4 und an der Innenseite des zylindrischen Elements 32 ab. Sie erzeugt einen gewissen "Offset-Axialdruck". Die Tellerfeder 36 kann beispielsweise so ausgelegt sein, dass der durch sie erzeugte Axialdruck zur Übertragung geringer Drehmomente ausreicht. Bei mittleren bzw. höheren Drehmomenten muss dann in jedem Fall ein Hydraulikdruck über den Druckraum 26 aufgebracht werden.

Wie aus Figur 2 ersichtlich ist, ist die "Axialdruckerzeugungseinrichtung" äußerst platzsparend im Bereich zwischen dem bei bekannten Toroidgetrieben bislang weitgehend ungenutzten Bauraum zwischen den Rückseiten der Antriebsscheiben 4, 5, der Variatorwelle 19 bzw. dem Lagerrohr 18 und der Verzahnung 29 untergebracht. Durch eine derartige Anordnung kann eine Verkürzung des erforderlichen Bauraums des Toroidgetriebes in Axialrichtung erreicht werden. Außerdem ergibt sich mit einer derartigen Anordnung beim Anfahren aus dem "Geared-Neutral-Zustand" eine vergleichsweise geringe Massenträgheit und somit eine hohe Anfahrdynamik.

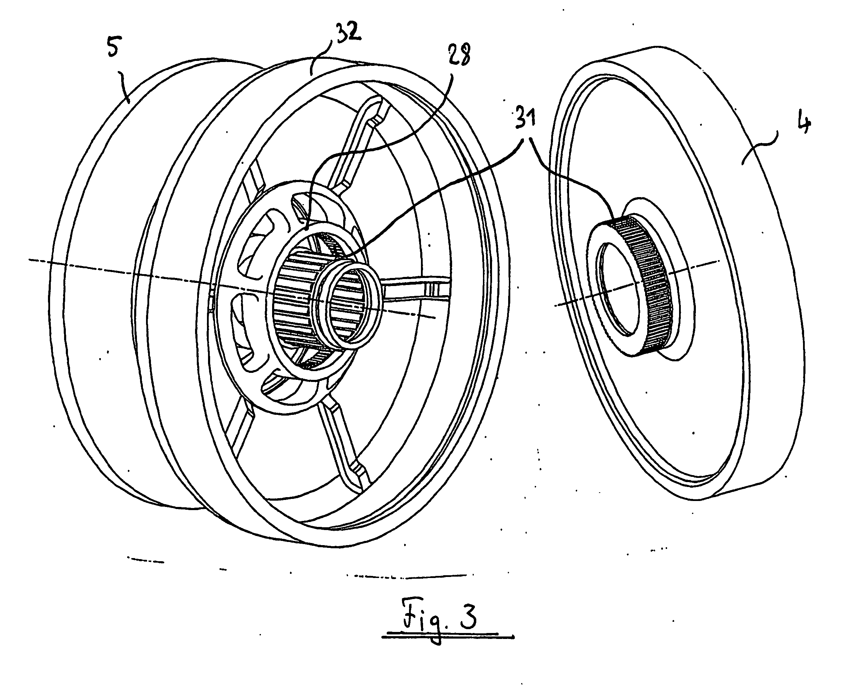

Figur 3 zeigt eine dreidimensionale Darstellung der in Figur 2 gezeigten Anordnung, Sehr anschaulich zu sehen sind die Antriebsscheiben 4, 5, die Längsverzahnung 31 zwischen dem Verzahnungsträger 28 und der Antriebsscheibe 4 sowie das zylindrische bzw. becherartige Element 32, das in zusammengebautem Zustand am Außenumfang der Antriebsscheibe 4 anliegt.

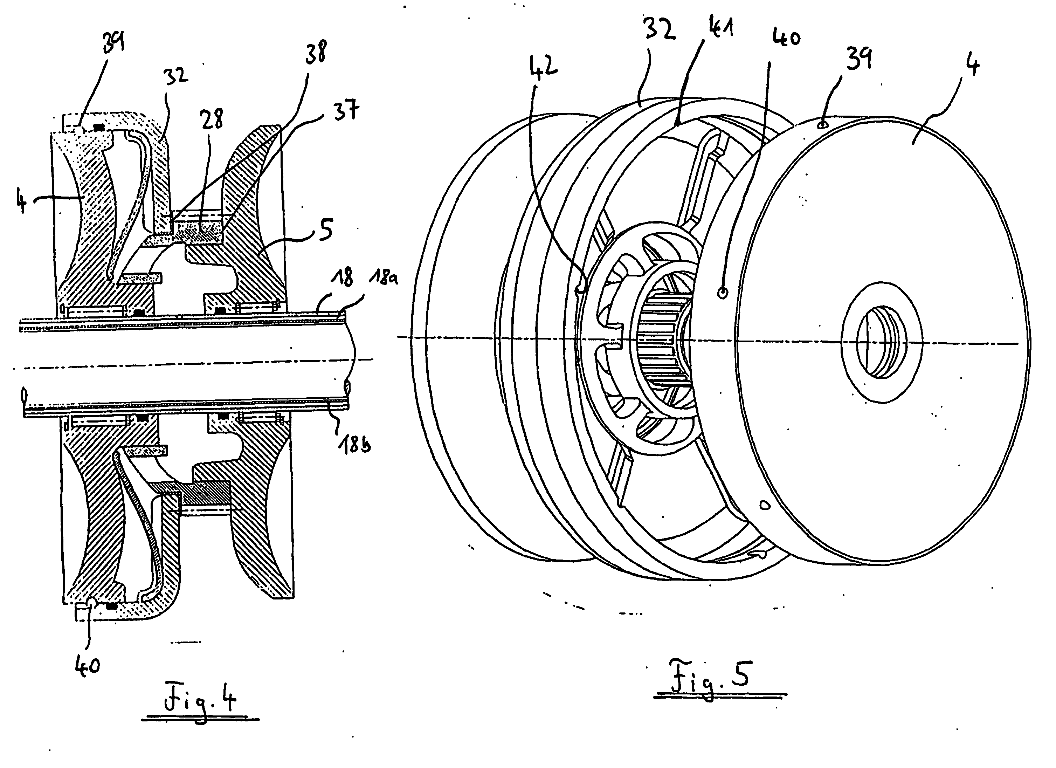

Figur 4 zeigt eine Variante des Ausführungsbeispiels der Figur 1. Auch hier ist die Antriebsscheibe 5 über eine Fügestelle 37 mit dem Verzahnungsträger 28 und dieser über eine Fügestelle 38 mit dem zylindrischen Element 32 verbunden. Im Unterschied zum Ausführungsbeispiel der Figur 2 sind die beiden Antriebsscheiben 4, 5 jedoch nicht über eine Längsverzahnung in Drehrichtung miteinander gekoppelt, sondern über Drehmomentmitnehmer, die hier als Kugeln 39, 40 ausgebildet sind und die am Außenumfang der Antriebsscheibe 4 bzw. am Innenumfang des zylindrischen Elements 32 angeordnet sind. Ein Drehmomentfluss zwischen den beiden Antriebsscheiben 4, 5 erfolgt also über den Verzahnungsträger 28 und das zylindrische Element 32.

Figur 5 zeigt die Anordnung der Figur 4 in Explosionsdarstellung. Sehr deutlich zu sehen sind die kugelförmigen Drehmomentübertragungsmittel 39, 40, die am Außenumfang der Antriebsscheibe 4 vorgesehen sind. Die kugelförmigen Drehmomentübertragungsmittel 39, 40 greifen in zugeordnete Ausnehmungen 41, 42 ein, die am Innenumfang des zylindrischen Elements 32 vorgesehen sind und somit eine Drehkopplung der Antriebsscheibe 4 mit dem zylindrischen Element 32 herstellen.

## Patentansprüche

1. Toroidgetriebe (1) mit
zwei Toroidgetriebeeinheiten (2, 3), denen jeweils eine Antriebsscheibe (4, 5), eine koaxial dazu angeordnete Abtriebsscheibe (6, 7) und zwischen der Antriebsscheibe (4, 5) und der Abtriebsscheibe (6, 7) angeordnete Roller (8 - 11) zugeordnet sind, wobei die beiden Antriebsscheiben (4, 5) im Bereich zwischen den beiden Abtriebsscheiben (6, 7) angeordnet sind,
einer Axialkrafterzeugungseinrichtung zum Erzeugen einer Spannkraft, welche die Antriebsscheiben (4, 5), die Abtriebsscheiben (6, 7) und die Roller (8 - 11) in Axialrichtung gegeneinander verspannt, so dass Drehmoment von den Antriebsscheiben (4, 5) über die zugeordneten Roller (8 - 11) auf die jeweils zugeordnete Abtriebsscheibe (6, 7) übertragbar ist,
**dadurch gekennzeichnet, dass**
die Axialkrafterzeugungseinrichtung eine Spannhydraulik ist, welche einen Druckraum (26) aufweist der zwischen den beiden Antriebsscheiben (4) der Toroidgetriebeeinheiten (2, 3) vorgesehen ist, wobei die Spannkraft durch Aufbringen eines Hydraulikdrucks in dem Druckraum (26) erzeugt wird, und wobei die beiden Antriebsscheiben relativ zueinander axial verschieblich angeordnet sind.

2. Toroidgetriebe (1) nach Anspruch 1, wobei die Antriebsscheiben (4, 5) jeweils eine Vorderseite aufweisen, auf denen die Roller (8 - 11) abrollen und eine der jeweiligen Vorderseite gegenüberliegende Rückseite (34, 35), wobei die beiden Rückseiten (34, 35) Begrenzungsflächen des Druckraums (26) bilden.

3. Toroidgetriebe (1) nach Anspruch 1 oder 2, wobei die beiden Antriebsscheiben (4, 5) drehbar auf einem Rohr (18) gelagert sind.

4. Toroidgetriebe (1) nach Anspruch 3, wobei der Druckraum über eine in der Wand des Rohrs (18) vorgesehene Ausnehmung (24, 25) in Fluidverbindung mit dem Innenraum des Rohrs (18) steht.

5. Toroidgetriebe (1) nach einem der Ansprüche 3 oder 4, wobei das Rohr (18) drehfest in einem Getriebegehäuse angeordnet ist.

6. Toroidgetriebe (1) nach einem der Ansprüche 1 bis 5, wobei die beiden Antriebsscheiben (4, 5) drehfest miteinander verbunden sind und eine Verzahnung (29) vorgesehen ist, über die Drehmoment in die beiden Antriebsscheiben (4, 5) eingeleitet werden kann.

7. Toroidgetriebe (1) nach Anspruch 6, wobei sich im Bereich zwischen den beiden Antriebsscheiben (4, 5) und konzentrisch zu den Antriebsscheiben (4, 5) ein ringartiger Verzahnungsträger (28) befindet, an dessen Außenumfang die Verzahnung (29) vorgesehen ist, über die das Drehmoment in die beiden Antriebsscheiben (4, 5) eingeleitet werden kann.

8. Toroidgetriebe (1) nach Anspruch 7, wobei der Verzahnungsträger (28) drehfest, axial fest und fluiddicht mit einer der beiden Antriebsscheiben (5) verbunden ist und eine Innenseite des Verzahnungsträgers (28) eine Begrenzungsfläche des Druckraums (26) bildet.

9. Toroidgetriebe (1) nach Anspruch 7 oder 8, wobei der Verzahnuhgsträger (28) über eine Schiebeverzahnung (31) drehfest und axial verschieblich mit der anderen Antriebsscheibe (4) verbunden ist.

10. Toroidgetriebe (1) nach einem der Ansprüche 1 bis 9, wobei im Bereich zwischen den beiden Antriebsscheiben (4, 5) ein zylindrisches Element (32) vorgesehen ist, das drehfest, axial fest und fluiddicht mit einer der Antriebsscheiben (4) oder mit dem mit einer der Antriebsscheiben (5) verbundenen Verzahnungsträger (28) verbunden ist, wobei das zylindrische Element axial verschieblich mit der anderen Antriebsscheibe (4) verbunden ist und eine Innenseite des zylindrischen Elements (32) eine Begrenzungsfläche des Druckraums (26) bildet.

11. Toroidgetriebe (1) nach Anspruch 10, wobei das zylindrische Element (32) drehfest, axial verschieblich und fluiddicht mit der anderen Antriebsscheibe (4) verbunden ist.

12. Toroidgetriebe (1) nach einem der Ansprüche 1 bis 11, wobei im Bereich zwischen den beiden Antriebsscheiben (4, 5) eine Axialdruckfeder (36) angeordnet ist, welche die beiden Antriebsscheiben (4, 5) auseinander drückt.

13. Toroidgetriebe (1) nach Anspruch 12, wobei die Axialdruckfeder (36) eine Tellerfeder ist.

14. Toroidgetriebe (1) nach Anspruch 12 oder 13, wobei sich die Axialdruckfeder (36) an der Rückseite (34) einer der beiden Antriebsscheiben (4) und an dem zylindrischen Element (32) abstützt.

## Claims

1. A toroidal drive (1) comprising
Two toroidal-drive units (2, 3) respectively associated with a drive disc (4, 5), a driven disc (6, 7) coaxial therewith and rollers (8 - 11) between the drive disc (4, 5) and the driven disc (6, 7), wherein the two drive discs (4, 5) are disposed in the region between the two driven discs (6, 7), and comprising
an axial force generator for generating a clamping force which clamps the drive discs (4, 5), the driven discs (6, 7) and the rollers (8-11) together in the axial direction so that torque can be transmitted from the drive discs (4, 5) via the associated rollers (8 -11) to the associated driven disc (6, 7),
**characterised in that**
the axial force generator is a hydraulic clamping unit which comprises a pressure chamber (26) between the two drive discs (4) of the toroidal drive units (2, 3), wherein the clamping force is generated by applying a hydraulic pressure to the pressure chamber (26) and wherein the two drive discs (4, 5) are disposed so as to be axially movable relative to one another.

2. A toroidal drive according to claim 1, wherein the drive discs (4, 5) each have a front on which the rollers (8 - 11) roll, and a respective back (34, 35) opposite the front, wherein the two backs (34, 35) are surfaces bounding the pressure chamber (26).

3. A toroidal drive (1) according to claim 1 or 2, wherein the two drive discs (4, 5) are rotatably mounted on a tube (18).

4. A toroidal drive (1) according to claim 3, wherein the pressure chamber is in fluid connection with the interior of the tube (18) via a recess (24, 25) in the wall of the tube (18).

5. A toroidal drive (1) according to claim 3 or 4, wherein the tube (18) is co-rotatably mounted in a gearbox.

6. A toroidal drive (1) according to any of claims 1 to 5, wherein the two drive discs (4, 5) are co-rotatably connected and teeth (29) are provided for introducing torque into the two drive discs (4, 5).

7. A toroidal drive (1) according to claim 6, wherein an annular tooth-holder (28) is disposed in the region between the two drive discs (4, 5) and concentrically with the two drive discs (4, 5), and teeth (29) on the outer periphery of the tooth-holder can transmit torque to the two drive discs (4, 5).

8. A toroidal drive according to claim 7, wherein the tooth-holder (28) is co-rotatably and axially immovably connected in fluid-tight manner to one of the two drive discs (5) and an inner side of the tooth-holder (28) forms a surface bounding the pressure chamber (26).

9. A toroidal drive (1) according to claim 7 or 8, wherein the tooth-holder (28) is co-rotatably and axially movably connected to the other drive disc (4) by sliding teeth (31).

10. A toroidal drive (1) according to any of claims 1 to 9, wherein a cylindrical element (32) is provided in the region between the two drive discs (4, 5) and is co-rotatably, and axially immovably connected in fluid-tight manner to one of the drive discs (4) or to the tooth-holder (28) connected to one of the drive discs (5), wherein the cylindrical element is axially movably connected to the other drive disc (4) and an inner side of the cylindrical element (32) forms a surface bounding the pressure chamber (26).

11. A toroidal drive (1) according to claim 10, wherein the cylindrical element (32) has a co-rotatable, axially movable, fluid-tight connection to the other drive disc (4).

12. A toroidal drive (1) according to any of claims 1 to 11, wherein an axial pressure spring (36) is disposed between the two drive discs (4, 5) and presses the two drive discs (4, 5) apart.

13. A toroidal drive (1) according to claim 12, wherein the axial pressure spring (36) is a cup spring.

14. A toroidal drive (1) according to claim 12 or 13, wherein the axial pressure spring (36) abuts the back (34) of one of the two drive discs (4) and the cylindrical element (32).

## Revendications

1. Engrenage toroïdal (1) comprenant
deux unités d'engrenage toroïdal (2, 3) auxquelles sont associés respectivement une poulie motrice (4, 5), une poulie attaquée (6, 7) disposée coaxialement par rapport à celle-ci, et des rouleaux (8 - 11) disposés entre la poulie motrice (4, 5) et la poulie attaquée (6, 7), les deux poulies motrices (4, 5) étant disposées entre les deux poulies attaquées (6, 7), un dispositif générateur de force axiale pour générer une force qui serre les unes contre les autres les poulies motrices (4, 5), les poulies attaquées (6, 7) et les rouleaux (8 - 11) dans la direction axiale, permettant ainsi une transmission du couple de rotation depuis les poulies motrices (4, 5) par les rouleaux (8 - 11) sur la poulie attaquée (6, 7) respectivement associée,
**caractérisé en ce que**
le dispositif générateur de force axiale est une hydraulique de serrage qui présente une chambre de pression (26) prévue entre les deux poulies motrices (4) des unités d'engrenage toroïdal (2, 3), la force de serrage étant générée par l'établissement d'une pression hydraulique dans la chambre de pression (26), et les deux poulies motrices (4, 5) étant disposées de façon déplaçable axialement l'une par rapport à l'autre.

2. Engrenage toroïdal (1) selon la revendication 1,
**caractérisé en ce que**
les poulies motrices (4, 5) présentent chacune une face avant sur lesquelles roulent les rouleaux (8 - 11) et une face arrière (34, 35) située en regard de la face avant respective, les deux faces arrières (34, 35) formant des surfaces de délimitation de la chambre de pression (26).

3. Engrenage toroïdal (1) selon la revendication 1 ou 2,
**caractérisé en ce que**
les deux poulies motrices (4, 5) sont logées en rotation sur un tube (18).

4. Engrenage toroïdal (1) selon la revendication 3,
**caractérisé en ce que**
la chambre de pression est en communication fluidique avec l'espace intérieur du tube (18) par un évidement (24, 25) prévu dans la paroi du tube (18).

5. Engrenage toroïdal (1) selon l'une quelconque des revendications 3 ou 4,
**caractérisé en ce que**
le tube (18) est disposé immobile en rotation dans un boîtier d'engrenage.

6. Engrenage toroïdal (1) selon l'une quelconque des revendications 1 à 5,
**caractérisé en ce que**
les deux poulies motrices (4, 5) sont reliées l'une à l'autre immobiles en rotation et une denture (29) est prévue permettant d'introduire des couples de rotation dans les deux poulies motrices (4, 5).

7. Engrenage toroïdal (1) selon la revendication 6,
**caractérisé en ce qu'**
un support de denture annulaire (28) est situé entre les deux poulies motrices (4, 5) et concentriquement aux poulies motrices (4, 5), dont la périphérie extérieure porte la denture (29) permettant d'introduire le couple de rotation dans les deux poulies motrices (4, 5).

8. Engrenage toroïdal (1) selon la revendication 7,
**caractérisé en ce que**
le support de denture (28) est relié à l'une des deux poulies motrices (5) de façon immobile en rotation, axialement fixe et étanche aux fluides, et une face intérieure du support de denture (28) forme une surface de délimitation de la chambre de pression (26).

9. Engrenage toroïdal (1) selon la revendication 7 ou 8,
**caractérisé en ce que**
le support de denture (28) est relié à l'autre poulie motrice (4) de façon immobile en rotation et axialement déplaçable par une denture coulissante (31).

10. Engrenage toroïdal (1) selon l'une quelconque des revendications 1 à 9,
**caractérisé en ce qu'**
un élément cylindrique (32) prévu entre les deux poulies motrices (4, 5) est relié de façon immobile en rotation, axialement fixe et étanche aux fluides à l'une des poulies motrices (4) ou au support de denture (28) relié à l'une des poulies motrices (5), et l'élément cylindrique est relié de façon axialement déplaçable à l'autre poulie motrice (4) et une face intérieure de l'élément cylindrique (32) forme une surface de délimitation de la chambre de pression (26).

11. Engrenage toroïdal (1) selon la revendication 10,
**caractérisé en ce que**
l'élément cylindrique (32) est relié à l'autre poulie motrice (4) de façon immobile en rotation, axialement déplaçable et étanche aux fluides.

12. Engrenant toroïdal (1) selon l'une des revendications 1 à 11,
**caractérisé en ce qu'**
un ressort de pression axiale (36) disposé entre les deux poulies motrices (4, 5) écarte les deux poulies motrices (4, 5) l'une de l'autre.

13. Engrenage toroïdal (1) selon la revendication 12,
**caractérisé en ce que**
le ressort de pression axiale (36) est une rondelle Belleville.

14. Engrenage toroïdal (1) selon la revendication 12 ou 13,
**caractérisé en ce que**
le ressort de pression axiale (36) prend appui contre la face arrière (34) de l'une des deux poulies motrices (4) et l'élément cylindrique (32).
